# EUROPEAN PATENT APPLICATION

(11) **EP 4 706 845 A1**
(43) Date of publication of application: **11.03.2026**
(21) Application number: 25198116.3
(22) Date of filing: 26.08.2025
(51) Int. Cl.: B21D 39/02, B60J 5/04, F16B 11/00

(54) **METHOD FOR HEMMING EDGES OF COMPONENTS**

(30) Priority: 26.08.2024 US 202463687026 P
(71) Applicant: Magna International Inc., Aurora, ON L4G 7K1 (CA)
(72) Inventor: Stradinger, Thomas, Northport, AL, 35475 (US)
(74) Representative: Grünecker Patent- und Rechtsanwälte PartG mbB

(57) **Abstract**

A method for forming a hemmed edge of a component includes providing a first blank and a second blank. The method also includes applying an adhesive to a top surface of the first blank with an adhesive distributor. The method also includes positioning the second blank over the first blank with a lower surface of the second blank positioned over the top surface of the first blank such that the adhesive is applied between the lower surface of the second blank and the top surface of the first blank. The method also includes folding a first edge of the first blank over the second blank such that a portion of the top surface of the first blank overlies the upper surface of the second blank. A distribution end of an adhesive distributor defines an opening that is wider in a width direction than in a height direction.

## Description

### CROSS REFERENCE TO RELATED APPLICATIONS

This U.S. Non-Provisional Patent Application claims the benefit of U.S. Provisional Patent Application No. 63/687,026, filed August 26, 2024 the contents of which is incorporated herein by reference in its entirety.

### FIELD OF THE DISCLOSURE

The present disclosure relates to methods of hemming edges of components, such as automobile components, like doors and fenders.

### BACKGROUND

This section provides background information related to the present disclosure which is not necessarily prior art.

It is known that hemming the edges of vehicle components, such as doors and fenders, offers several benefits, including increased strength, smooth and safe edges, corrosion resistance, and the connection of multiple panels or blanks. The hemming process typically involves folding the edge of a first metal panel or blank over itself to create a double-layered edge. Often, a second blank is placed over the first blank, and the folded edge of the first blank is wrapped over the second blank, positioning it between two segments of the first blank. Adhesive is usually applied between the first and second blanks to secure them together and eliminate any gaps.

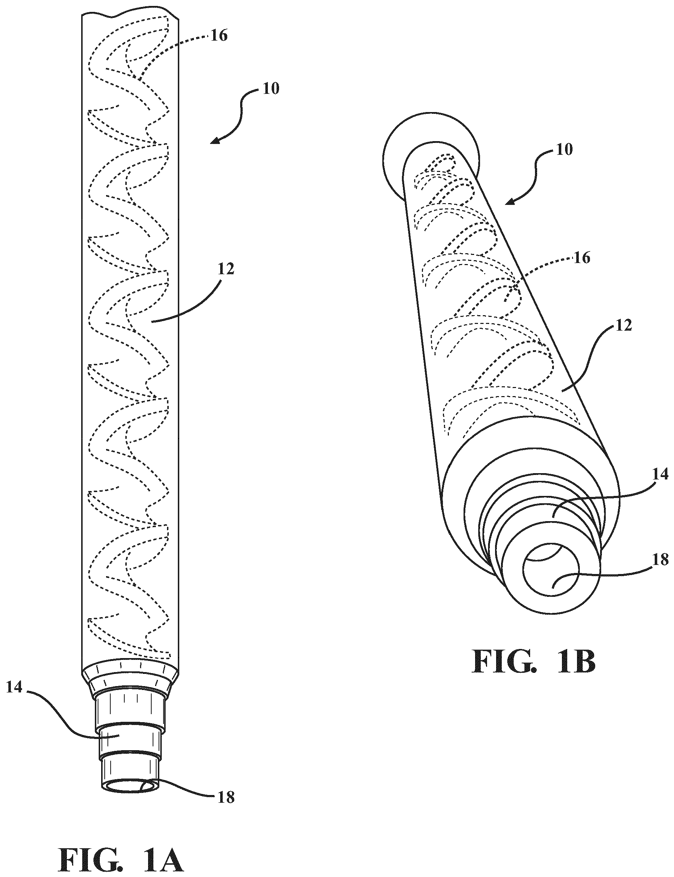

An adhesive distributor is typically used to apply the adhesive between the first and second blanks prior to hemming. As shown in FIGS. 1A-1B, conventional adhesive distributors 10 have a tube-shaped main portion 12 which terminates at a distribution end 14. A two component adhesive 16 is typically contained in the main portion 12 which gets mixed and pumped through the main portion 12 and out of an outlet 18 at an end of the distribution end 14. As shown, the outlet 18 is conventionally circle-shaped, such that the adhesive delivers a rope-like bead of adhesive 16. An issue with such adhesive distributors 10 is that a large amount of the adhesive 16 tends to be squeezed out of the gap between the first and second blanks due to the rope shape of the applied adhesive 16, which results in a labor intensive cleaning process. In view of the foregoing, there remains a continued need for improvements to such hemming operations.

### SUMMARY OF THE DISCLOSURE

According to an aspect of the disclosure, a method for forming a hemmed edge of a component includes providing a first blank that has at least one first edge, a top surface and a bottom surface. The method also includes providing a second blank that has at least one second edge, an upper surface and a lower surface. The method also includes applying an adhesive to the top surface of the first blank from an adhesive distributor. The method also includes positioning the second blank over the first blank with the lower surface of the second blank positioned over the top surface of the first blank such that the adhesive is applied between the lower surface of the second blank and the top surface of the first blank. The method also includes folding the first edge of the first blank over the second blank such that a portion of top surface of the first blank overlies the upper surface of the second blank. A distribution end of the adhesive distributor defines an opening for emitting the adhesive out of the adhesive distributor. The opening is larger in a width direction than in a height direction of the opening such that the adhesive emitted from the opening has a strip shape to minimize leaked adhesive during folding of the first edge of the first blank over the second blank.

According to another aspect of the disclosure, a method for forming a hemmed edge of a component includes providing a first blank having at least one first edge, a top surface and a bottom surface. The method also includes providing a second blank that has at least one second edge, an upper surface and a lower surface. The method also includes applying an adhesive to the top surface of the first blank from an adhesive distributor. The method also includes positioning the second blank over the first blank, with the lower surface of the second blank positioned over the top surface of the first blank such that the adhesive is applied between the lower surface of the second blank and the top surface of the first blank. The method also includes folding the first edge of the first blank over the second blank such that a portion of top surface of the first blank overlies the upper surface of the second blank. A distribution end of the adhesive distributor defines an opening for emitting the adhesive out of the adhesive distributor. The distribution end is comprised of a generally planar or slightly cambered first surface overlying a generally planar or slightly cambered second surface such that the opening therebetween is generally oval or rectangular shaped such that the step of applying an adhesive to the top surface of the first blank from the adhesive distributor includes applying a strip-shaped strip of adhesive out of the opening of the adhesive distributor.

The strip / tape shaped bead of adhesive which is emitted from the opening which is wider than it is tall beneficially allows an appropriate amount of adhesive to be positioned between the first and second blanks without resulting cleanup / wiping of leaked adhesive on the component outside of the joint. This provides improved dimensional consistency of the joint, improved cycle times and lower labor costs.

### BRIEF DESCRIPTION OF THE DRAWINGS

Other advantages of the present disclosure will be readily appreciated, as the same becomes better understood by reference to the following detailed description when considered in connection with the accompanying drawings wherein:
FIG. 1A and 1B are perspective views of a conventional adhesive distributor for hemming operations;
FIG. 2A is a front view of a door component of a vehicle, illustrating hemmed edges of the door;
FIG. 2B is a magnified view of the hemmed edges of the door of FIG. 2A;
FIGS. 3A-3C are schematic side views of a hemming process for a vehicle component;
FIGS. 4A and 4B are perspective views of an improved adhesive distributor for hemming operations, according to an aspect of the disclosure; and
FIG. 5 is a flow diagram of a hemming process, according to an aspect of the disclosure.

### DESCRIPTION OF THE ENABLING EMBODIMENT

Example embodiments will now be described more fully with reference to the accompanying drawings. In general, the subject embodiments are directed to method for forming a hemmed edge 20 on a component 22, like a vehicle door 22 or fender. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. It should be appreciated that the teachings of the present disclosure could be applied to various types of vehicles such as recreation vehicles.

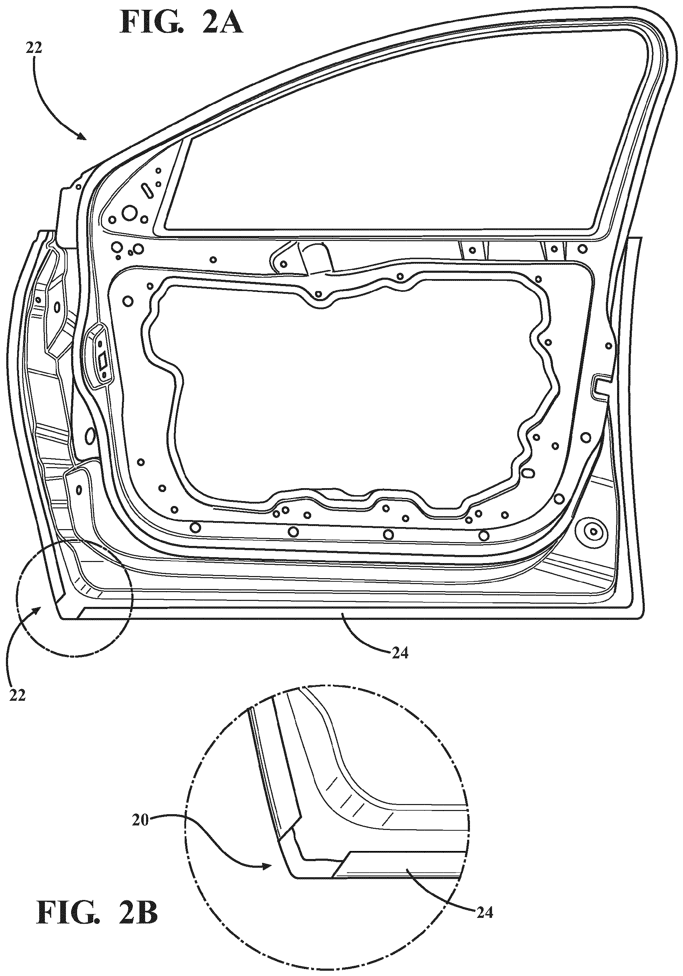

More particularly, referring to the figures, wherein like numerals indicate corresponding parts throughout the several views, embodiments of a method for forming a hemmed edge 20 for a component 22 are provided. The subject method may be used for various components 22, such as the vehicle doors 22 illustrated in FIGS. 2A-2B, or fenders. Edges of the component 22 are hemmed to provide a folded edge 24 in order to provide benefits such as increased strength, a safe smooth edge, corrosion resistance, and a connection of multiple panels / blanks.

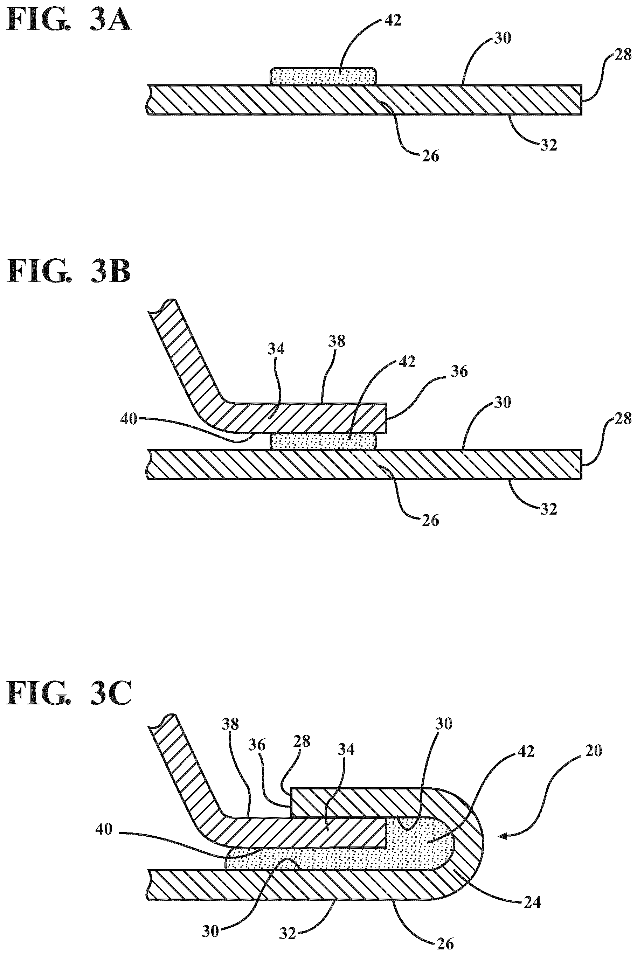

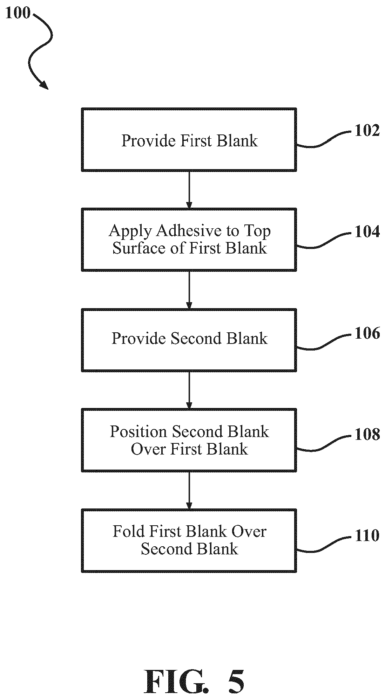

Steps of an embodiment of the method are illustrated in FIG. 5. With additional reference to FIG. 3A, the method 100 includes 102 providing a first blank 26. The first blank 26 has at least one first edge 28, a top surface 30 and a bottom surface 32. The method also includes 104 applying an adhesive 42 to the top surface of the first blank 26 from an adhesive distributor 44. As shown in FIG. 3B, the method also includes 106 providing a second blank 34. The second blank 34 has at least one second edge 36, an upper surface 38 and a lower surface 40.

The method also includes 108 positioning the second blank 34 over the first blank 26, with the lower surface 40 of the second blank 34 positioned over the top surface 30 of the first blank 26 such that the adhesive 42 is applied between the lower surface 40 of the second blank 34 and the top surface 30 of the first blank 26, and with the second edge 36 of the second blank 34 spaced inwardly from the first edge 28 of the first blank 26.

As shown in FIG. 3C, the method continues with 110 folding the first edge 28 of the first blank 26 over the second blank 34 such that a portion of the top surface 30 of the first blank 26 overlies the upper surface 38 of the second blank 34 in order to provide the final, folded/hemmed edge 24.

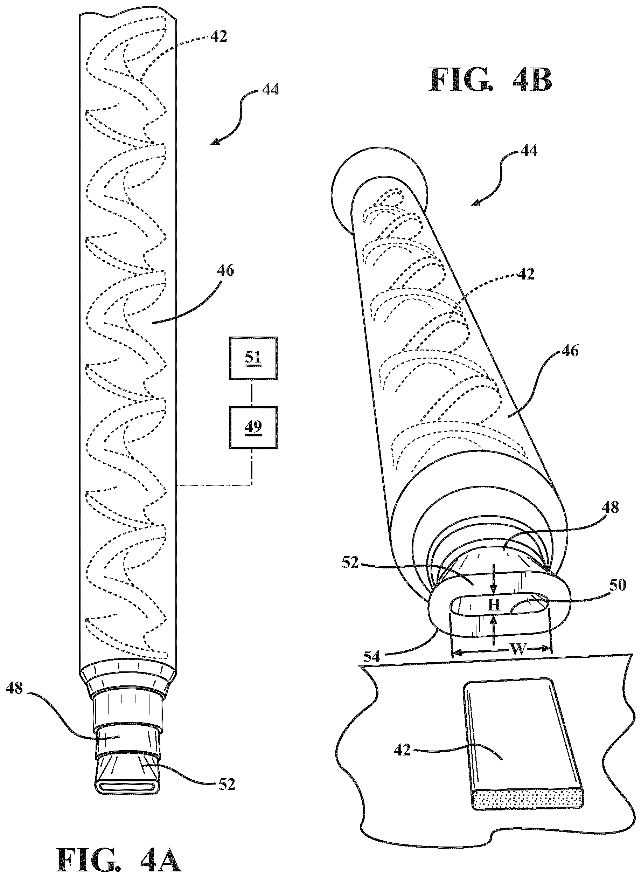

As shown in FIG. 4A-4B, the adhesive distributor 44 has a tube-shaped main portion 46 which terminates at a distribution end 48. A two component adhesive 42 is contained in the main portion 46 which gets mixed and pumped through the main portion 46 and out of an outlet 50 at the distribution end 48. The adhesive distributor 10 may be coupled to a robot arm 49 (schematically shown) to control administration of the adhesive 16 at specific locations. A controller 51 may be connected to the robot arm 49 and adhesive distributor 44 to move the robot arm 49 to coordinated locations and to emit the adhesive 16 from the adhesive distributor 44 at coordinated flow rates and at coordinated times. The distribution end 48 is comprised of a generally flat or cambered first surface 52 overlying a generally flat or cambered second surface 54 such that the outlet 50 therebetween is generally oval-shaped or rectangular shaped. The outlet 50 has a larger width W than height H. Because of the oval or rectangular shaped outlet 50, the step of applying an adhesive 42 to the top surface 30 of the first blank 26 from the adhesive distributor 44 includes applying a strip or tape shaped strip of adhesive 42 out of the outlet 50 of the adhesive distributor 10. The strip / tape shaped bead of adhesive 42 beneficially allows an appropriate amount of adhesive 42 to be positioned between the first and second blanks 26, 34, without a resulting cleanup/wiping of leaked adhesive on the component. This provides improved dimensional consistency of the joint, improved cycle times and lower labor costs.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in that particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or later, or intervening element or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to described various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in any embodiment, even if not specifically shown or described. The same may also be varied in many ways. Such variations are not to be regarded as a departure from the disclosure, and all such modifications are intended to be included within the scope of the disclosure.

## Claims

1. A method for forming a hemmed edge of a component, comprising:
providing a first blank having at least one first edge, a top surface and a bottom surface;
providing a second blank having at least one second edge, an upper surface and a lower surface;
applying an adhesive to the top surface of the first blank from an adhesive distributor;
positioning the second blank over the first blank with the lower surface of the second blank positioned over the top surface of the first blank such that the adhesive is applied between the lower surface of the second blank and the top surface of the first blank; and
folding the first edge of the first blank over the second blank such that a portion of top surface of the first blank overlies the upper surface of the second blank;
wherein a distribution end of the adhesive distributor defines an opening for emitting the adhesive out of the adhesive distributor, the opening being larger in a width direction than in a height direction of the opening such that the adhesive emitted from the opening has a strip shape to minimize leaked adhesive during folding of the first edge of the first blank over the second blank.

2. The method as set forth in claim 1, wherein the distribution end has a generally planar or slightly cambered first surface and a generally planar or slightly cambered second surface underlying the first surface.

3. The method as set forth in claim 2, wherein the opening of the distribution end has an oval shape.

4. The method as set forth in claim 2, wherein the opening of the distribution end has a rectangular shape.

5. The method as set forth in claim **1,** wherein movement of the adhesive distributor while applying the adhesive to the top surface of the first blank is controlled by a robotic arm.

6. The method as set forth in claim 1, wherein the adhesive is a two component adhesive which gets mixed and pumped through a main portion of the adhesive distributor before being emitted out of the outlet at the distribution end.

7. The method as set forth in claim 1, wherein the component is a door of an automobile.

8. The method as set forth in claim 1, wherein the component is a fender of an automobile.

9. A method for forming a hemmed edge of a component, comprising:
providing a first blank having at least one first edge, a top surface and a bottom surface;
providing a second blank having at least one second edge, an upper surface and a lower surface;
applying an adhesive to the top surface of the first blank from an adhesive distributor;
positioning the second blank over the first blank with the lower surface of the second blank positioned over the top surface of the first blank such that the adhesive is applied between the lower surface of the second blank and the top surface of the first blank; and
folding the first edge of the first blank over the second blank such that a portion of top surface of the first blank overlies the upper surface of the second blank;
wherein a distribution end of the adhesive distributor defines an opening for emitting the adhesive out of the adhesive distributor, the distribution end comprised of a generally planar or slightly cambered first surface overlying a generally planar or slightly cambered second surface such that the opening therebetween is generally oval or rectangular shaped such that the step of applying an adhesive to the top surface of the first blank from the adhesive distributor includes applying a strip of adhesive out of the opening of the adhesive distributor.

10. The method as set forth in claim 9, wherein movement of the adhesive distributor while applying the adhesive to the top surface of the first blank is controlled by a robotic arm.

11. The method as set forth in claim 9, wherein the adhesive is a two component adhesive which gets mixed and pumped through a main portion of the adhesive distributor before being emitted out of the outlet at the distribution end.

12. The method as set forth in claim 9, wherein the component is a door of an automobile.

13. The method as set forth in claim 9, wherein the component is a fender of an automobile.
